# EUROPÄISCHE PATENTSCHRIFT

(11) **EP 0 738 645 B1**
(45) Veröffentlichungstag und Bekanntmachung des Hinweises auf die Patenterteilung: **18.08.1999**
(21) Anmeldenummer: 96105618.1
(22) Anmeldetag: 10.04.1996
(51) Int. Cl.: B62B 3/18

(54) **Stapelbarer Einkaufswagen**
Nestable shopping trolley
Chariot d'achat emboitâble

(30) Priorität: 23.09.1995 DE 29515149 U; 28.09.1995 DE 29515238 U; 09.09.1995 DE 29514529 U; 20.04.1995 DE 29506748 U; 20.04.1995 DE 29506750 U
(43) Veröffentlichungstag der Anmeldung: 23.10.1996
(62) Teilanmeldung aus: 96118149.2
(73) Patentinhaber: Wanzl Metallwarenfabrik GmbH, 89336 Leipheim (DE)
(72) Erfinder: Eberlein, Herbert, 89347 Bubesheim (DE); Honold, Günther, 89340 Leipheim (DE); Blaha, Martin, 89335 Ichenhausen (DE)

(56) Entgegenhaltungen:
- EP-A- 0 141 398
- EP-A- 0 672 570
- DE-A- 3 444 969
- DE-U- 8 500 639
- DE-U- 8 912 204

## Beschreibung

Die Erfindung betrifft einen stapelbaren Einkaufswagen, mit einem Fahrgestell, das einen Korb trägt, mit einer Schiebeeinrichtung und mit einer im rückwärtigen Bereich angeordneten, zum Abstellen von Gegenständen bestimmten Ablage, deren Abstellfläche entweder durch wenigstens ein bewegliches Teil oder durch mindestens ein bewegliches Teil und durch ein am, Fahrgestell angeordnetes ortsfestes Teil gebildet ist, wobei die Ablage nach rückwärts herausklappbar oder herausziehbar ist und die Ablage entweder von Hand oder beim Stapeln mehrerer Einkaufswagen voll einem hinteren einzuschiebenden Einkaufswagen in eine Verstaustellung bewegbar ist, bei der die Einkaufswagen engstmöglich ineinandergeschoben sind.

Einkaufswagen dieser Art werden in SB-Märkten den Kunden zur Verfügung gestellt. Während in, Korb dieser Einkaufswagen das übliche Einkaufsgut abgestellt wird, dient die unterhalb des Korbes befindliche, nach hinten herausziehbare Ablage dazu, Getränkekisten oder andere großvolumige Gegenstände auf der Ablage, also außerhalb des Korbes zu transportieren. Wird die Ablage nicht mehr benötigt, kann man sie entweder von Hand in die Nichtgebrauchslage bewegen, oder die herausgezogene Ablage eines vorausbefindlichen Einkaufswagens läßt sich von einem rückwärtigen, in den vorausbefindlichen Einkaufswagen einzuschiebenden Einkaufswagen wahrend des Ineinanderschiebevorganges in die Verstaustellung bewegen. In dieser Lage befindet sich die Ablage bevorzugt unterhalb des Korbes, wobei nur die Rückseite der Ablage knapp unterhalb der hinteren Korbbodenbegrenzung angeordnet sichbar ist. In der Verstaustellung ist die Ablage nicht nutzbar.

Typische Beispeile dieser Einkaufswagengattung sind in der deutschen Offenlegungsschrift DE 27 42 958.9, in der deutschen Patentschrift DE 34 48 335 C3 sowie in den europäischen Patentschriften EP 0 141 398 B1, EP 0 349 423 B1, EP 0 402 551 B1 und EP 0 672 570 A1 näher beschrieben. Die Ablagen dieser Einkaufswagen sind so gestaltet und angeordnet, daß sie sich ausschließlich zum Transport von Getränkekisten eignen, da diese aufgrund ihres Gewichts und ihrer großen Stellfläche eine insgesamt stabile Lage einnehmen. Kleinere und leichtere Gegenstände, etwa kleinere Schachteln oder auch Flaschengebinde, lassen sich hingegen nur schlecht mit diesen Ablagen transportieren, da sie auf der Ablage instabil aufliegen und deshalb zum Herabfallen neigen.

Man hat ferner festgestellt, daß ein nicht unerheblicher Anteil von Kunden eines SB-Marktes, vor allein dann, wenn die genannten Einkaufswagen in einem Markt neu eingeführt werden, mit der unterhalb des Korbes verborgenen Ablage nichts anzufangen wissen und weiterhin versuchen, größere oder auch großvolumige Einkaufsgegenstände in, Korb unterzubringen. Natürlich wäre es ein leichtes, an der Rückseite der Ablage ein Hinweisschild anzubringen, welches auf den Zweck einer solchen Ablage aufmerksam macht. Nachdem jedoch Einkaufswagen als Massenartikel einzustufen sind, verursachen bereits unbedeutende Mehrkosten pro Einkaufswagen, bezogen auf deren Gesamtmenge, einen nicht zu unterschätzenden Unkostenfaktor, der nicht hinnehmbar ist.

Einen Einkaufswagen, bei dein die Ablage in der Verstaustellung ebenfalls schlecht sichtbar ist, beschreibt die DE-U-89 12 204. Bei diesem Einkaufswagen befindet sich die Ablage in ihrer Verstaustellung so in dem als Rohrkonstruktion ausgebildeten Fahrgestell, daß die in der genannten Schrift als Hilfsrahmen bezeichnete Ablage 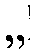 kaum merklich" (Zitat) aus dem Fahrgestell herausragt. Da der Einkaufswagen unterhalb seines Korbes einen gitterartigen Ladeboden aufweist, wird der Benützer dieses Einkaufswagens beispielsweise eine Getränkekiste auf diesem jederzeit sichtbaren Ladeboden abstellen und kaum vermuten, daß eigentlich noch eine weitere Abstellmöglichkeit durch eine nach hinten herausziehbare Ablage gegeben ist. Diese Ablage ist übrigens am Einkaufswagen so angeordnet, daß sie beim Ineinanderschieben zweier Einkaufswagen nicht vom rückwärtig einzuschiebenden Einkaufswagen in die Verstaustellung bewegt. Die Ablage muß daher, um beim Gehen nicht zu stören, von, Wagenbenutzer von Hand in die Verstaustellung gebracht werden. Tut er dies nicht, kann es zum Verklemmen beim platzsparenden Ineinanderschieben von mehreren Einkaufswagen kommen.

Unabhängig von dein zuletzt genannten Mangel besteht die Aufgabe der Erfindung darin, einen gattungsgemäßen Einkaufswagen möglichst unter Vermeidung von Mehrkosten so weiterzuentwickeln, daß der unbefangene Benutzer dieses Einkaufswagens sofort auf das Vorhandensein und auf den Zweck der Ablage hingewiesen wird, ohne daß dazu z.B. ein Hinweisschild am Einkaufswagen notwendig ist. Mit dein zu entwickelnden Einkaufswagen soll es ferner möglich sein, auch kleinere Gegenstände sicher auf der Ablage transportieren zu können.

Die Lösung der Aufgabe besteht darin, daß sich die Ablage in der Verstaustellung in einer ersten Gebrauchslage befindet, in der die Ablage zum Abstellen kleinerer Gegenstände geeignet ist und durch Herausklappen oder Herausziehen zumindest eine zweite Gebrauchslage einnimmt, in der sie zum Abstellen von größeren Gegenständen, insbesondere Getränkekisten vorgesehen ist und daß in der ersten Gebrauchslage der Ablage die Rückseite des Korbes oder die hintere Begrenzung des Korbbodens zur Bildung einer weiteren Stütze für auf der Ablage befindliche Gegenstände bestimmt sind.

Durch die erfinderische Lösung wird in vorteilhafter Weise das Vorhandensein und der Zweck der Ablage vom Kunden erkannt, ohne daß dazu ein gesondertes Hinweisschild erforderlich wäre. Ferner ist, obwohl sich die Ablage noch in ihrer Verstaustellung befindet, ein Teilbereich der Abstellfläche der Ablage nutzbar, so daß eine erste Gebrauchslage gebildet ist, in der kleinere Gegenstände auf der Ablage abgestellt werden können, die bevorzugt an der hinteren Korbbegrenzung sich anlehnend oder abstützend, vor einem Herabfallen bewahrt, sicher transportiert werden können.

Die eingangs zum Stand der Technik genannten Einkaufswagen vermögen nicht zur Lösung der gestellten Aufgabe beizutragen. In keiner der genannten Schriften finden sich Fundstellen, die darauf hinweisen könnten, daß die Ablage in ihrer Verstaustellung als solche besser erkennbar und vor allem in dieser Lage bereits zum Abstellen kleinerer Gegenstände geeignet sei.

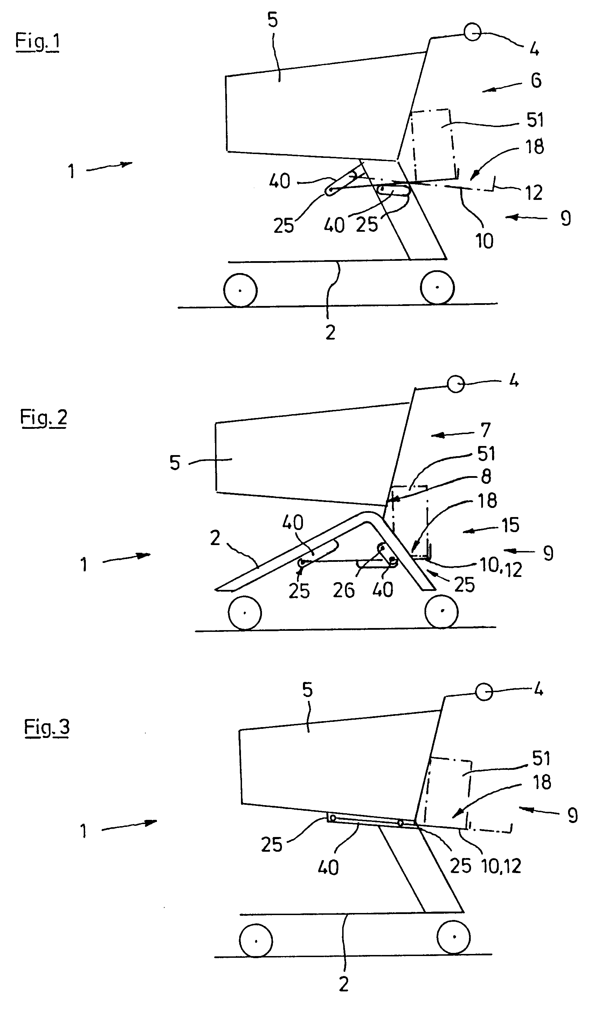

Die Erfindung wird anhand von Ausführungsbeispielen gemäß den Figuren 1 bis 14 näher erläutert.

Die in den nachfolgenden Zeichnungen dargestellten Einkaufswagen 1 entsprechen in ihrem Grundaufbau jenen Einkaufswagen 1, wie sie in den eingangs genannten Patentschriften beschrieben sind. Natürlich sind konstruktive und gestalterische Unterschiede möglich, doch weisen alle in den Figuren 1 bis 14 dargestellten Einkaufswagen 1 ein Fahrgestell 2 auf, das ein Behältnis in der bevorzugten Form eines Korbes 5 trägt. Die Einkaufswagen 1 sind mit einer Schiebeeinrichtung 4 ausgestattet, die sich im rückwärtigen Bereich 9 des Einkaufswagens 1 befindet und die am Korb 5 oder am Fahrgestell 2 vorgesehen ist. Die Einkaufswagen 1 sind ferner in bekannter Weise so gestaltet, daß sich gleiche Einkaufswagen 1 ineinanderschieben, also stapeln lassen, wobei, um diesen Zweck erfüllen zu können, die Rückwand 6 der Körbe 5 in bewährter Weise um eine horizontale Achse schwenkbar aufgehängt ist. Alle Einkaufswagen 1 sind mit einer in ihrem rückwärtigen Bereich 9 angeordneten, zum Abstellen von Gegenständen 50 bestimmten Ablage 10 ausgestattet, die nach rückwärts herausklappbar oder herausziehbar ist und die sich entweder von Hand oder beim Stapeln mehrerer Einkaufswagen 1 von einem hinteren einzuschiebenden Einkaufswagen 1 in die Verstaustellung bewegen läßt. Dabei ist die Abstellfläche 18 der Ablage 10 entweder durch ein bewegliches Teil 12 oder durch wenigstens ein bewegliches Teil 12 und durch ein ortsfest am Fahrgestell 2 angeordnetes Teil 11 gebildet.

Bei den in den Figuren 1 bis 3 dargestellten Einkaufswagen 1 ist die Ablage 10 in Führungen 40 schiebebeweglich gelagert, wobei in bekannter Weise Anschläge 25 vorgesehen sind, die den Bewegungsbereich der Ablage 10 bestimmen. Die Lage der Anschläge 25 ist so gewählt, daß die Ablage 10 in ihrer Verstaustellung oder nach der Entnahme des Einkaufswagens 1 aus einer Reihe gestapelter Einkaufswagen 1 bereits eine erste Gebrauchslage einnimmt, in der sie, gut sichtbar, auch zum Abstellen kleinerer Gegenstände 51 geeignet ist. Um zu vermeiden, daß sich die in der Verstaustellung bzw. in der ersten Gebrauchslage befindliche Ablage 10 von selbst in die zweite Gebrauchslage bewegt (strichpunktiert gezeichnet), nimmt sie in der ersten Gebrauchslage bevorzugt eine in Schieberichtung leicht geneigte Lage ein, siehe Fig. 1 und 2. Die Ablage 10 kann aber auch eine horizontale oder eine nach rückwärts geneigte Lage einnehmen, vgl. Fig. 2 und 3. Zieht man die Ablage 10 heraus, nimmt sie die zweite Gebrauchslage ein, in der sie zur Aufnahme von größeren Gegenständen 50, insbesondere von Getränkekisten geeignet ist. Bei allen gezeigten Ausführungsbeispielen läßt sich die Ablage 10 in eine Verstaustellung bewegen, bei der ein Teil der Abstellfläche 18 der Ablage 10 bereits zum Abstellen kleinerer Gegenstände 51 nutzbar ist. Befindet sich die Ablage 10 in ihrer ersten Gebrauchslage, so dienen die Rückseite 7 des Korbes 5 oder die hintere Begrenzung 8 des Korbbodens dazu, eine Stütze oder einen Anschlag für die kleineren auf der Ablage 10 befindlichen Gegenstände 51 zu bilden, um sie vor dem Nachvornekippen zu bewahren, siehe Fig. 1 und 2. Weiter an der Ablage 10 befindliche, nicht näher dargestellte Anschläge tragen dazu bei, die auf der Ablage 10 befindlichen Gegenstände 50, 51, 52 sicher zu transportieren. Die nutzbare, in Schieberichtung gemessene Tiefe der Abstellfläche 18 der Ablage 10 beträgt in der ersten Gebrauchslage bevorzugt mindestens 50mm.

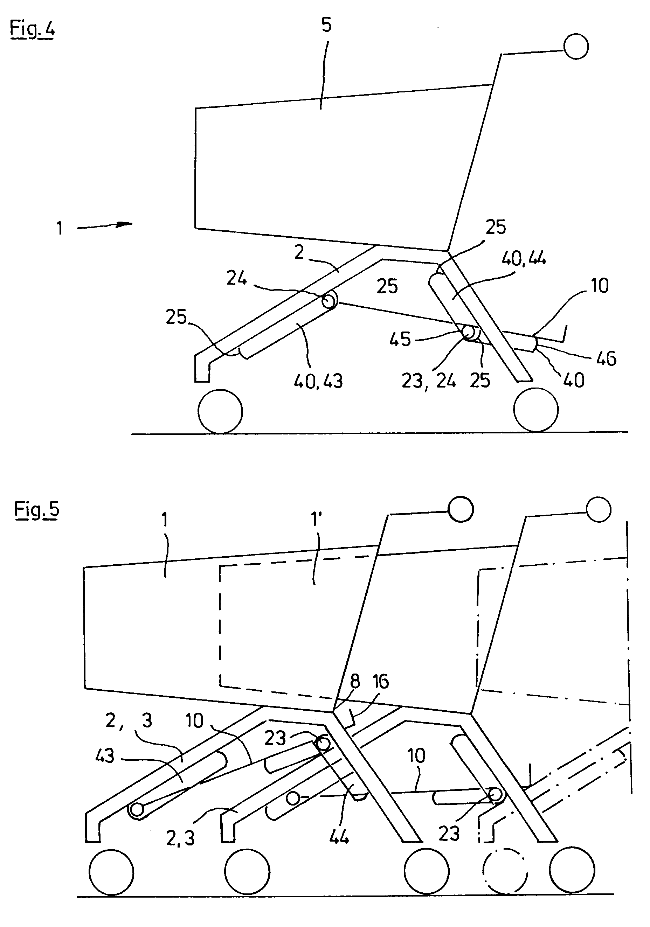

Anhand der Figuren 4 bis 7 wird in Anlehnung an Fig. 2 ein weiteres Ausführungsbeispiel beschrieben. Die zu beiden Längsseiten des Einkaufswagens 1 ortsfest angeordneten, auf senkrechten Ebenen befindlichen Führungen 40, vgl. Fig. 4, sind durch vordere Führungsabschnitte 43, die in Schieberichtung fallend angeordnet sind, und durch hintere Führungsabschitte 44 gebildet, die in Schieberichtung ansteigen. Am vorderen Bereich der Ablage 10 befindliche vordere Stützelemente 24 greifen in die vorderen Führungsabschnitte 43 ein und sind in diesen schiebebeweglich geführt. Die hinteren Führungsabschnitte 44 dienen zur Aufnahme eines ebenfalls mit Stützelementen 24 versehenen Querstabes 23, der sich quer zur Schieberichtung des Einkaufswagens 1 erstreckt, in den beiden hinteren Führungsabschnitten 44 ebenfalls schiebebeweglich gehalten ist und durch zwei an der Unterseite der Ablage 10 befindliche, in Schieberichtung sich erstreckende Führungen 40 hindurchgeführt ist. An den Führungsabschnitten 43, 44 und an den Führungen 40 befindliche Anschläge 25 legen den Bereich der Verschiebbarkeit der Ablage 10 fest. In Fig. 4 ist die Ablage 10 als am weitesten herausgezogen dargestellt. Die vorderen Stützelemente 24 der Ablage 10 schlagen am oberen Ende der vorderen Führungsabschnitte 43 an, während die Stützelemente 24 des Querstabes 23 am unteren Ende der hinteren Führungsabschnitte 44 anliegen. Gleichzeitig schlägt die vordere Begrenzung 45 der an der Ablage 10 befindlichen Führungen 40 an den Stützelementen 24 des Querstabes 23 an. Schiebt man die Ablage 10 wieder in eine Verstaustellung, wandern die vorderen Stützelemente 24 innerhalb der vorderen Führungsabschnitte 43 abwärtsgleitend nach vorne, wo sie an dein unteren Ende der vorderen Führungsabschnitte 43 anschlagen können. Der Querstab 23 bleibt beim Einschiebevorgang vorerst noch in der eben beschriebenen Lage, bis die hintere Begrenzung 46 der beiden Führungen 40 der Ablage 10 an die Stützelemente 24 des Querstabes 23 anstoßen und diesen entlang der hinteren Führungsabschnitte 44 aufwärtsgleitend nach oben drücken.

Fig. 5 zeigt zwei engstmöglich ineinandergeschobene, also gestapelte Einkaufswagen 1, 1'. Geeignete Teile, z.B. die vorderen Träger 3 des Fahrgestelles 2 des rückwärtig eingeschobenen Einkaufswagens 1' haben die Ablage 10 und den Querstab 23 des vorausbefindlichen Einkaufswagens 1 unterfahren, die Ablage 10 nach vorne geschoben und den Querstab 23 und die Ablage 10 schließlich nach oben gedrückt. Die rückwärtige Begrenzung 16 der Ablage 10 befindet sich sehr nahe an der hinteren Begrenzung 8 des Korbbodens. Die Neigung der vorderen und hinteren Führungsabschnitte 43, 44 sowie die Form der hinteren Führungsabschnitte 44 sind so gewählt, daß beim Heraussziehen des rückwärtigen Einkaufswagens 1' aus dem vorausbefindlichen Einkaufswagen 1 dessen Querstab 23 und damit die Ablage 10 innerhalb der hinteren Führungsabschnitte 44 von selbst nach unten fällt, so daß der die Ablage 10 stützende Querstab 23 am unteren Ende der hinteren Führungsabschnitte 44 anliegt, vgl. auch rechts dargestellter Einkaufswagen 1'.

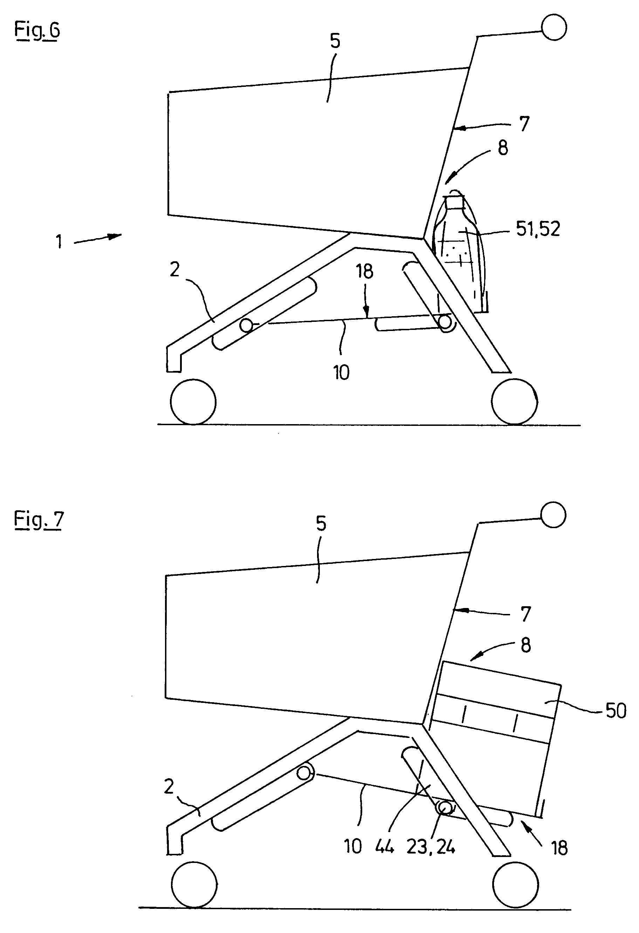

Diese Lage ist in der Zeichnung gemäß Fig. 6 ersichtlich. Durch das erfolgte Absenken der Ablage 10 wird der Abstand zwischen der Ablage 10 und dem Korbboden so vergrößert, daß der rückwärtige Bereich der Abstellfläche 18 der Ablage 10 gut sichtbar und bevorzugt für das Abstellen von etwas größeren Verkaufsartikeln wie z.B. schrumpfverpackten Flaschen 52 nutzbar wird. Diese hier als erste Gebrauchslage bezeichnete Lage der Ablage 10 unterscheidet sich von einer zweiten Gebrauchslage dadurch, daß die Ablage 10 weniger weit nach rückwärts hinausragt, als dies bei der zweiten Gebrauchslage der Fall ist. Die nutzbare, in Schieberichtung des Einkaufswagens 1 gemessene Tiefe der Abstellfläche 18 der Ablage 10 beträgt in der ersten Gebrauchslage bevorzugt mindestens 50 mm.

Fig. 7 zeigt die zweite Gebrauchslage der Ablage 10, die dazu dient, z.B. große Getränkekisten 50 aufzunehmen. Diese Lage ist bereits in Fig. 4 beschrieben worden. Die Ablage 10 ist dabei am weitesten herausgezogen. Die nutzbare Tiefe der Abstellfläche 18 in der zweiten Gebrauchslage beträgt maximal etwa 350 mm.

Um das selbsttätige Absenken der Ablage 10 eines Einkaufswagens 1 beim erwähnten Entstapelungsvorgang zu erreichen, steigen die hinteren Führungsabschnitte 44 in Schieberichtung relativ steil so an, daß eine Selbsthemmung zwischen dem Querstab 23 mit seinen Stützelementen 24 und den hinteren Führungsabschnitten 44 nicht eintreten kann. Dadurch verharrt die Ablage 10 eines vorausbefindlichen Einkaufswagens 1 auch nach der Entnahme eines rückwärtigen Einkaufswagens 1'aus einem Stapel nicht in jener Lage, wie in Fig. 5 beim links dargestellten Einkaufswagen 1 gezeigt, sondern sie fällt zusammen mit dein Querstab 23 in den hinteren Führungsabschnitten 44 gleitend nach unten. Nimmt die Ablage 10 die erste Gebrauchslage ein, so dienen, neben anderen an der Ablage 10 vorgesehenen Anschlägen, die Rückseite 7 des Korbes 5 oder die hintere Begrenzung 8 des Korbbodens dazu, kleineren Gegenständen 51 eine weitere Stütze zu geben, um sie nicht nach vorne kippen zu lassen. In der zweiten Gebrauchslage fällt die Ablage 10 bevorzugt nach hinten ab.

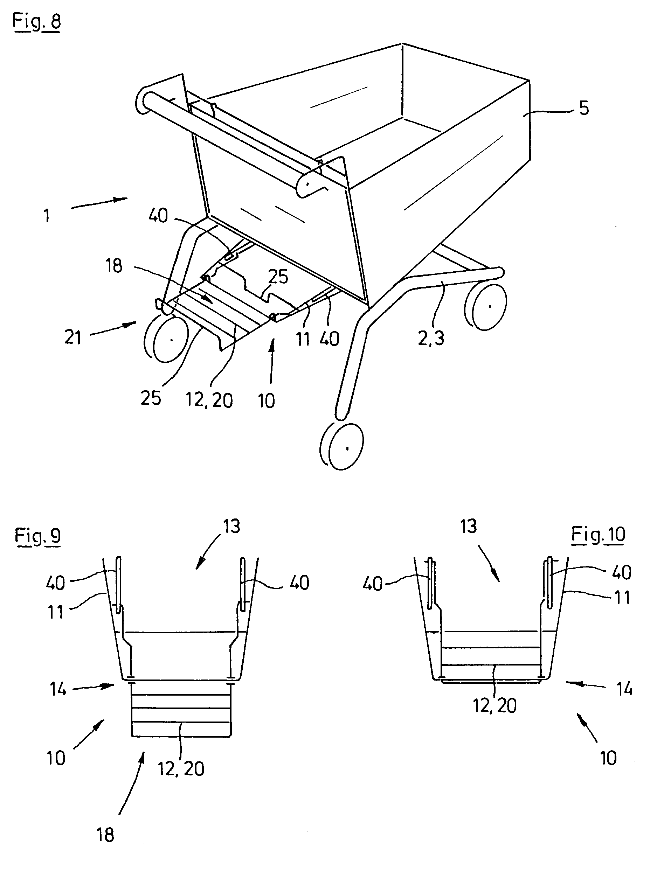

Die Ablage 10 des in den Figuren 8 bis 10 beschriebenen Einkaufswagens 1 besteht aus einem am Fahrgestell 2 und/oder am Korb 5 befestigten ortsfesten Teil 11 und aus einem beweglichen Teil 12, das als Schiebeteil 20 gestaltet ist, das in am ortsfesten Teil 11 vorgesehenen Führungen 40 verschiebbar gelagert ist, in der sich das Schiebeteil 20 größtenteils innerhalb der Grundrißfläche des ortsfesten Teiles 11 befindet. Das Schiebeteil 20 weist an seinem hinteren Ende 21 wenigstens einen nach oben gerichtten Anschlag 25 auf.

Es ist üblich, vgl. Fig. 8, die Träger 3 des Fahrgestelles 2 in ihrem oberen Bereich durch zwei Querstreben zu verbinden. In vorteilhafter Weise ist deshalb das ortsfeste Teil 11 der Ablage 10 bevorzugt an den in der Zeichnung nicht dargestellten Querstreben befestigt. Es ist jedoch auch möglich, das ortsfeste Teil 11 der Ablage 10 an der Unterseite des Korbes 5 zu befestigen.
Im Beispiel ist die Ablage 10 als eine aus Drähten oder Stäben gefertigte Einrichtung gestaltet. Dabei ist einer der quer verlaufenden Stäbe des ortsfesten Teiles 11 mittig nach unten gekröpft, um einen Anschlag 25 für das Schiebeteil 20 eines vorausbefindlichen Einkaufswagens 1 zu bilden. Beim Ineinanderschieben zweier Einkaufswagen 1 drückt der Anschlag 25 des hinteren Einkaufswagens 1 das Schiebeteil 20 des vorausbefindlichen Einkaufswagens 1 in die Verstaustellung.
In einer Draufsicht zeigen die Figuren 9 und 10 die Ablage 10 in Gebrauchslage und in der Verstaustellung. Das ortsfeste Teil 11 ist von oben betrachtet trapezförmig gestaltet. Der breite Bereich 13 des ortsfesten Teiles 11 dient zum Befestigen am Fahrgestell 2, während der schmale Bereich 14 nach hinten vom Einkaufswagen 1 wegragt.
Am ortsfesten Teil 11 sind paarweise Führungen 40 vorgesehen, in welchen Teilbereiche des Schiebeteiles 20 schiebebeweglich geführt sind. Die Führungen 40 sind so gestaltet, daß sich das Schiebeteil 20 nur in Längsrichtung des Einkaufswagens 1 bewegen läßt. In Fig. 9 befindet sich die Ablage 10 in der zweiten Gebrauchslage. Das Schiebeteil 20 ist nach hinten herausgezogen und bildet zusammen mit dem ortsfesten Teil 11 eine große Abstellfläche 18. Fig. 10 hingegen zeigt die Ablage 10 in der ersten Gebrauchslage, die der Verstaustellung entspricht. Das Schiebeteil 20 befindet sich mit seinem größten Teil innerhalb des Grundrisses des ortsfesten Teiles 11. Das Maß der Verschiebbarkeit des Schiebeteiles 20 wird durch die Länge der Führungen 40 festgelegt, die sich im breiten Bereich 13 des ortsfesten Teiles 11 befinden. Das Schiebeteil 20 ist schmäler als das ortsfeste Teil 11.

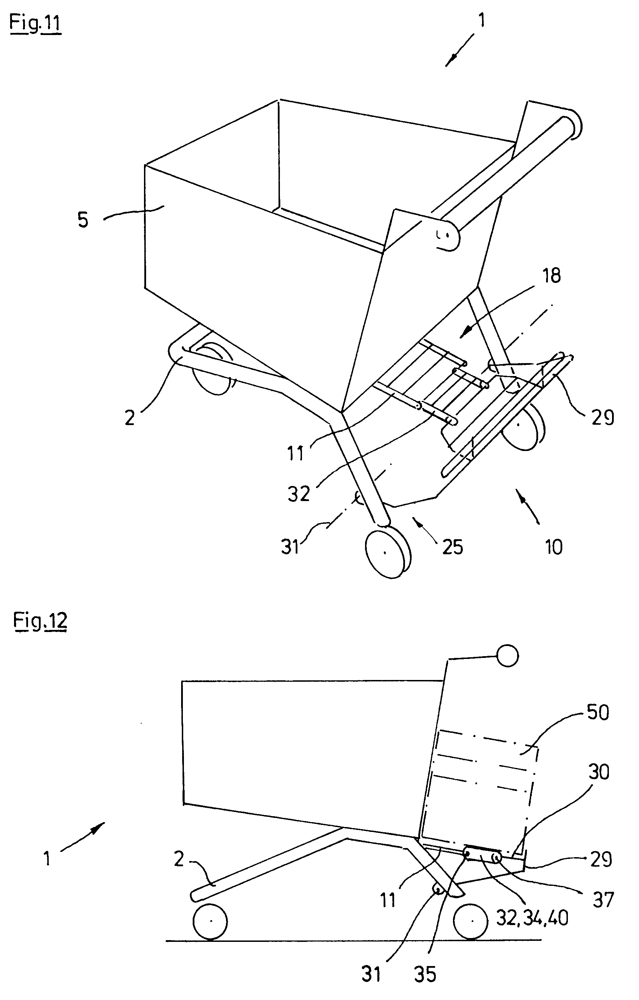

Bei dem in den Figuren 11 bis 14 beschriebenen Einkaufswagen 1 ist die Ablage 10, vgl. Fig. 11, durch ein ortsfestes Teil 11, durch ein Schwenkteil 29 und durch ein Halteteil 32 gebildet. Das ortsfeste Teil 11, bevorzugt als flächiges, aus Draht gefertigtes Bauteil gestaltet, ist unterhalb des Korbes 5 am Fahrgestell 2 oder am Korb 5 befestigt und ragt nach hinten ein Stück vor. Wie in der EP 0 141 398 beschrieben, weist die Ablage 10 ein uni eine horizontale Achse 31 verschwenkbares Schwenkteil 29 sowie ein bewegliches Halteteil 32 auf, wobei das Halteteil 32 das Schwenkteil 29 an das ortsfeste Teil 11 koppelt und wobei Anschläge 25 vorgesehen sind, die den Bewegungsbereich der Ablage 10 bestimmen. Im Beispiel ist die Ablage 10 nach hinten herausgeklappt, um beispielsweise eine große Getränkekiste 50 aufnehmen zu können. Die Abstellfläche 18 wird durch das ortsfeste Teil 11 und durch die beiden beweglichen Teile Schwenkteil 29 und Halteteil 32 gebildet. Das bewegliche Teil 12 besteht dabei aus dem Schwenkteil 29 und aus dem Halteteil 32.

In einer Seitenansicht zeigt Fig. 12 den gleichen Einkaufswagen 1. Man erkennt das nach hinten auskragende, bevorzugt nach hinten leicht abfallende ortsfeste Teil 11, das einen Querstab 35 aufweist, der zur Aufnahme zweier beabstandeter Schiebeführungen 40 bestimmt ist, die am Halteteil 32 angeordnet sind. Das Halteteil 32 läßt sich somit, den Querstab 35 umgreifend, entlang der Längsrichtung des Einkaufswagens 1 verschieben. Das Halteteil 32 weist ferner zwei Aufnahmen 34 auf, die zur Bildung einer Gelenkverbindung mit einem am Schwenkteil 29 befindlichen Querstab 37 bestimmt sind. Das bevorzugt einen Abstellabschnitt 30 aufweisende Schwenkteil 29 ist um die quer zur Schieberichtung des Einkaufswagens 1 sich erstreckende horizontale Achse 31 schwenkbar am Fahrgestell 2 oder am ortsfesten Teil 11 befestigt. Die Ablage 10 ist aus ihrer Verstaustellung nach hinten herausgeklappt oder herausgezogen, nimmt somit die zweite Gebrauchslage ein und trägt beispielsweise eine große Getränkekiste 50.

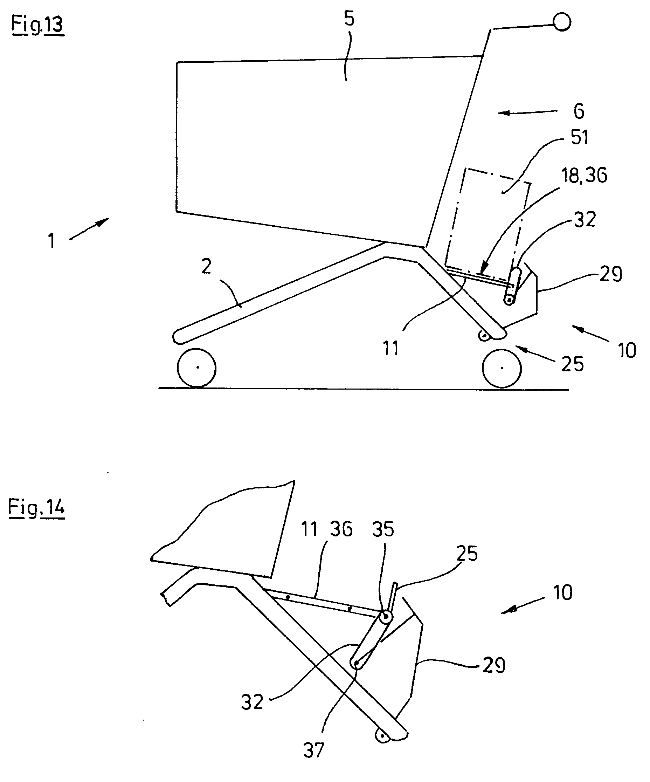

Fig. 13 zeigt den gleichen Einkaufswagen 1 jedoch mit der in der Verstaustellung befindlichen Ablage 10. Auf dem ortsfesten Teil 11 ist ein Gegenstand, beispielsweise eine kleine Getränkekiste 51 abgestellt. Durch die gewählte Kinematik - Schiebeführung des Halteteiles 32 mit dem ortsfesten Teil 11 und gelenkige Verbindung des Halteteiles 32 mit dem Schwenkteil 29- sowie durch die entsprechende Anordnung der nicht näher dargestellten Anschläge 25 für die Ablage 10, läßt sich diese so weit in Richtung Rückwand 6 des Korbes 5 verschwenken, bis das Halteteil 32 eine Lage einnimmt, in der es etwa in einem rechten Winkel zur Ebene 36 des ortsfesten Teiles 11 angeordnet ist und dabei ein Stück weit nach oben über die Ebene 36 ragt. In dieser Lage dient das Halteteil 32 der Ablage 10 dazu, den auf dem ortsfesten Teil 11 ruhenden Gegenstand 51 zu stützen, um ihn vor einem Herabfallen von der Ablage 10 zu bewahren. Das Halteteil 32 übernimmt in dieser Lage die Funktion eines Anschlags, während es in herausgeklappter Lage der Ablage 10 bevorzugt einen Teil der Abstellfläche 18 der Ablage 10 bildet. Aus der Zeichnung erkennt man ferner, daß die für die Ablage 10 gewählte Kiematik so ausgebildet ist, daß durch den leichten Druck, den der Gegenstand 51 auf das nun als Anschlag wirkende Halteteil 32 ausübt, die Ablage 10 bestrebt ist, sich noch weiter in die Verstaustellung zu bewegen. Die Ablage 10 öffnet sich also nicht von selbst, sondern sie drückt vielmehr den Gegenstand gegen die Rückwand 6 des Korbes 5, so daß der Effekt einer Selbsthemmung eintritt. Die Lage der Anschläge 25, welche den Bewegungsbereich der Ablage 10 bestimmen, sind so gewählt, daß die Ablage 10 in ihrer Verstaustellung oder nach der Entnahme des Einkaufswagens 1 aus einer Reihe gestapelter Einkaufswagen 1 bereits eine erste Gebrauchslage einnimmt, in der sie zusammen mit dem ortsfesten Teil 11 zum Abstellen kleinerer Gegenstände 51 geeignet ist und durch Herausziehen zumindest eine zweite Gebrauchslage einnimmt, in der sie zur Aufnahme von größeren Gegenständen 50, insbesondere von Getränkekisten bestimmt ist.

Fig. 14 zeigt ausschnittsweise die Ablage 10 sowie das ortsfeste Teil 11. Die Ablage 10 ist in der Verstaustellung gezeichnet. Im Gegensatz zum vorab beschriebenen Ausführungsbeispiel bildet das Halteteil 32 mit dem Querstab 35 des ortsfesten Teiles 11 ein Gelenk, während das Halteteil 32 mit dein Querstab 37 des Schwenkteiles 29 nunmehr eine Schiebeführung bildet. Aufgrund der gewählten Kinematik weist nun das Halteteil 32 in der Verstaustellung der Ablage 10 nach unten. Es ragt nicht über die Ebene 36 des ortsfesten Teiles 11 hinaus. Es ist deshalb zweckmäßig, am Halteteil 32 zusätzlich einen Anschlag 25 anzubingen, der in der Verstaustellung der Ablage 10, wie gezeichnet, nach oben über die Ebene 36 hinausragt, um einen Gegenstand 51 abstützen zu können. Der Anschlag 25 befindet sich innerhalb oder unter der Ebene 36, wenn die Ablage 10 nach hinten herausgeklappt oder herausgezogen ist.

Es bleibt abschließend anzumerken, daß die Ablage 10 bei einem einer Reihe entnommenen Einkaufswagen 1 nur dann eine erste Gebrauchslage einnimmt, wenn es sich nicht um den zuletzt in die Reihe eingeschobenen Einkaufswagen 1 handelt. Beim zuletzt genannten Einkaufswagen 1 kann die Ablage 10 entweder die erste, oder die zweite Gebrauchslage oder gar eine Zwischenlage einnehmen. Hier bleibt es dem Benutzer des zur Reihe zurückgebrachten Wagens 1 überlassen, in welcher Lage er die Ablage 10 beläßt. Erst wenn ein weiterer Einkaufswagen 1 in diesem Einkaufswagen 1 eingeschoben wird, ist sichergestellt, daß dessen Ablage 10 in der Verstaustellung die erste Gebrauchslage einnimmt.

## Patentansprüche

1. Stapelbarer Einkaufswagen (1), mit einem Fahrgestell (2), das einen Korb (5) trägt, mit einer Schiebeeinrichtung (4) und mit einer im rückwärtigen Bereich (9) angeordneten, zum Abstellen von Gegenständen (51, 52) bestimmten Ablage (10), deren Abstellfläche (18) entweder durch wenigstens ein bewegliches Teil (12) oder durch mindestens ein bewegliches Teil (12) und durch ein am Fahrgestell (2) angeordnetes ortsfestes Teil (11) gebildet ist, wobei die Ablage (10) nach rückwärts herausklappbar oder herausziehbar ist und die Ablage (10) entweder von Hand oder beim Stapeln mehrerer Einkaufswagen (1) von einem hinteren einzuschiebenden Einkautswagen (1) in eine Verstaustellung bewegbar ist, bei der die Einkaufswagen (1) engstmöglich ineinandergeschoben sind, dadurch **gekennzeichnet**, daß sieh die Ablage (10) in der Verstaustellung in einer ersten Gebrauchslage befindet, in der die Ablage (10) zum Abstellen kleinerer Gegenstände (51, 52) geeignet ist und durch Herausklappen oder Herausziehen zumindest eine zweite Gebrauchslage einnimmt, in der sie zum Abstellen von größeren Gegenständen (50), inbesondere Getränkekisten vorgesehen ist und daß in der ersten Gebrauchslage der Ablage (10) die Rückseite (7) des Korbes (5) oder die hintere Begrenzung (8) des Korbbodens zur Bildung einer weiteren Stütze für auf der Ablage (10) befindliche Gegenstände (51, 52) bestimmt sind.

2. Einkaufswagen nach Anspruch 1, dadurch **gekennzeichnet**, daß die nutzbare, in Schieberichtung des Einkaufswagens (1) gemessene Tiefe der Abstellfläche (18) der Ablage (10) mindestens 50 mm beträgt.

3. Einkaufswagen nach Anspruch 1 oder 2, dadurch **gekennzeichnet**, daß die Ablage (10) in ihrer ersten Gebrauchslage eine in Schieberichtung des Einkaufswagens (1) abfallende oder ansteigende oder eine horizontale Lage einnimmt.

## Claims

1. A stackable shopping trolley (1), having a wheel frame (2) bearing a basket (5), having a pushing arrangement (4) and having a rack (10) which is arranged in the rear region (9), is for the depositing of objects (51, 52) and whose deposit surface (18) is formed either by at least one movable part (12) or by at least one movable part (12) and a fixed part (11) which is arranged on the wheel frame (2), the rack (10) being able to be folded out or drawn out rearwards and the rack (10) being movable into a stowage position - in which the shopping trolleys (1) are pushed into one another as closely as possible- either manually or, when stacking a plurality of shopping trolleys (1), by a rear shopping trolley (1) to be pushed in, characterised in that in the stowage position, the rack (10) is located in a first utilisation position suitable for depositing relatively small objects (51, 52), and through the folding out or drawing out thereof, the rack (10) occupies at least one second utilisation position for the depositing of relatively large objects (50), in particular drinks crates, and in that in the first utilisation position of the rack (10), the rear (7) of the basket (5) or the rear boundary (8) of the basket base are intended to form another support for objects (51, 52) located on the rack (10).

2. A shopping trolley in accordance with Claim 1, characterised in that the usable depth, measured in the advancing direction of the shopping trolley (1), of the deposit surface (18) of the rack (10) is at least 50 mm.

3. A shopping trolley in accordance with Claim 1 or 2, characterised in that in its first utilisation position, the rack (10) slopes downwards or upwards in the advancing direction of the shopping trolley (1) or is horizontal.

## Revendications

1. Chariot à provisions emboîtable (1), avec un châssis (2), qui porte un panier (5), avec un dispositif de poussée (4) et avec un casier (10), disposé dans la région arrière (9) et destiné à recevoir des objets (51, 52), casier dont la surface de dépose (18) est formée soit par au moins une partie mobile (12), soit par au moins une partie mobile (12) et par une partie fixe (11) disposée sur le châssis (2), le casier (10) pouvant être déployé vers l'arrière par rabattement ou par traction, et le casier (10) pouvant être déplacé, soit à la main, soit par un chariot à provisions (1) enfilé par l'arrière lors de l'emboîtement de plusieurs chariots à provisions (1), dans une position de rangement dans laquelle les chariots à provisions (1) sont emboîtés les uns dans les autres le plus étroitement possible, **caractérisé** en ce que le casier (10) se trouve, dans la position de rangement, dans une première position d'utilisation dans laquelle le casier (10) convient pour recevoir des objets (51, 52) de plus petite taille, et prend, en le déployant par rabattement ou par traction, au moins une deuxième position d'utilisation, dans laquelle il est destiné à recevoir des objets (50) de plus grande taille, notamment des caisses de boissons, et en ce que, dans la première position d'utilisation du casier (10), le côté arrière (7) du panier (5) ou la délimitation arrière (8) du fond du panier sont destinés à former un appui supplémentaire pour des objets (51, 52) se trouvant sur le casier (10).

2. Chariot à provisions selon la revendication 1, **caractérisé** en ce que la profondeur utile, mesurée dans la direction de poussée du chariot à provisions (1), de la surface de dépose (18) du casier (10) est au moins égale à 50 mm.

3. Chariot à provisions selon la revendication 1 ou 2, **caractérisé** en ce que le casier (10) prend, dans sa première position d'utilisation, une position descendante ou ascendante dans la direction de poussée du chariot à provisions (1), ou une position horizontale.
